# FASCICULE DE BREVET EUROPEEN

(11) **EP 2 042 689 B1**
(45) Date de publication et mention de la délivrance du brevet: **10.11.2010**
(21) Numéro de dépôt: 08165112.7
(22) Date de dépôt: 25.09.2008
(51) Int. Cl.: F01D 5/30

(54) **Clinquant pour aube de turbomachine**
Dämpfungsblech für die Schaufel einer Turbomaschine
Shim for a blade of a turbomachine

(30) Priorité: 25.09.2007 FR 0757810
(43) Date de publication de la demande: 01.04.2009
(73) Titulaire: SNECMA, 75015 Paris (FR)
(72) Inventeur: Mace, Jérôme, 77240 Cesson (FR); NIitre, Thierry, 91250 Tigery (FR); Reghezza, Patrick, 77000 Vaux le Penil (FR)
(74) Mandataire: Besnard, Christophe Laurent

(56) Documents cités:
- EP-A- 0 341 455
- EP-A- 1 764 480
- DE-B- 1 025 421

## Description

L'invention concerne un clinquant pour aube de turbomachine. Elle se destine à tout type de turbomachine, terrestre ou aéronautique, et plus particulièrement aux turboréacteurs d'avion.

Plus précisément, l'invention concerne un clinquant destiné à envelopper le pied d'une aube, du type comprenant: deux branches destinées à couvrir les portées du pied d'aube; une base reliant ces branches entre elles; et, à une de ses extrémités, au moins un élément de maintien apte à venir en contact avec le pied d'aube pour retenir le clinquant par rapport au pied d'aube.

Dans la présente demande, une direction axiale est définie comme étant une direction parallèle à l'axe de rotation des aubes. En outre, l'amont et l'aval d'une pièce sont définis par rapport au sens normal d'écoulement des gaz passant entre les aubes.

Des exemples connus de clinquant sont donnés dans les brevets et les demandes de brevet publiées suivants : EP 0 341 455 A, EP 1 764 480 A et DE 1 025 421 B.

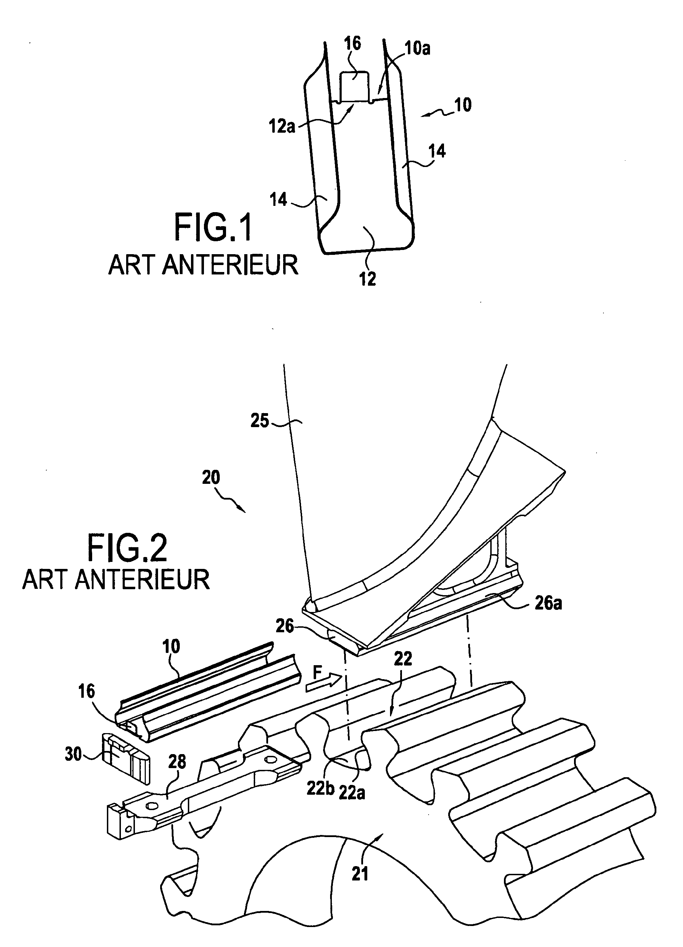

Un exemple connu de clinquant du type précité est représenté sur la figure 1. Ce clinquant 10 comprend deux branches 14 et une base 12 reliant ces branches 14 entre elles. Il comprend également à une de ses extrémités 10a, une languette de maintien 16. La languette de maintien 16 s'étend à partir du bord 12a de la base 12 et est rabattue entre les branches 14.

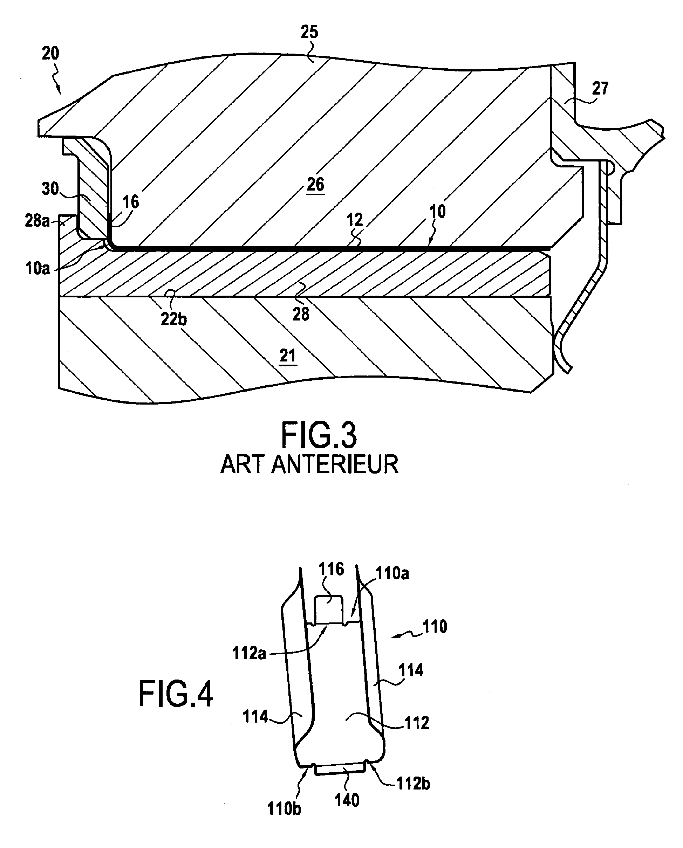

Le figure 2 représente partiellement, en vue explosée, un ensemble de rotor 20, connu, appartenant au module soufflante (ou module "fan") d'un turboréacteur d'avion. Cet ensemble 20 comprend un disque de rotor 21 présentant sur sa périphérie externe des alvéoles 22, et pour chaque alvéole 22 : une aube 25, fixée par son pied 26 dans l'alvéole 22; un clinquant 10 comme celui de la figure 1; une cale 28, et un verrou 30. L'ensemble de rotor 20 est représenté à l'état assemblé sur la figure 3.

Pour assembler l'ensemble 20, on monte d'abord le clinquant 10 sur le pied d'aube 26 en enfilant celui-ci par l'amont de l'aube, suivant la flèche F (voir figure 2). Le clinquant 10 enveloppe ainsi le pied d'aube 26, les branches 14 du clinquant couvrant respectivement les portées 26a du pied d'aube. On appelle portées 26a du pied d'aube 26 et portées 22a des alvéoles 22, les surfaces des pieds d'aube 26 et des alvéoles 22 (i.e. du disque 21) qui viennent en butée l'une contre l'autre, sous l'effet des efforts centrifuges lors de la rotation de l'ensemble 20.

Ensuite, on enfile le pied d'aube 26 et le clinquant 10 dans une alvéole 22. En aval, l'aube 25 vient en butée contre une paroi 27 du tambour du compresseur basse pression du turboréacteur (voir figure 3).

Puis on positionne le verrou 30 devant le pied d'aube 26, contre la languette de maintien 16 du clinquant 10.

Enfin, on glisse la cale 28 entre le clinquant 10 et le fond 22b de l'alvéole 22. Le verrou 30 est alors retenu entre le rebord amont 28a de la cale 28 et le pied d'aube 26, de sorte que la languette de maintien 16 est retenue entre le verrou 30 et le pied d'aube 26, ce qui permet d'empêcher le déplacement axial du clinquant 10 par rapport au pied d'aube 26.

Le clinquant 10 est une pièce intermédiaire entre l'aube 25 et le disque de rotor 21. C'est une sorte de chaussette qui enveloppe le pied 26 de l'aube 25 et qui permet de combler le jeu entre le pied d'aube 26 et le disque de rotor 21. Ce jeu peut exister dès l'origine (i.e. dès la conception de l'aube 25 et du disque 21) mais, la plupart du temps, il est dû à une reprise mécanique du disque 21 en réparation.

On rencontre avec le clinquant 10 l'inconvénient suivant: du fait de sa forme et de son élasticité, il arrive que le clinquant 10 soit, par erreur, monté à l'envers, c'est-à-dire qu'il soit enfilé par l'arrière (i.e. par l'aval) de l'aube 25 au lieu d'être enfilé par l'avant (i.e. par l'amont) de celle-ci. Dans ce cas, la languette de maintien 16 est située en aval du pied d'aube 26 et n'est pas maintenue entre le verrou 30 et le pied d'aube. Le clinquant 10 n'est alors pas retenu par la languette de maintien 16 et peut se déplacer axialement. Ce montage à l'envers du clinquant 10 entraîne une dégradation du disque 21 due au mauvais appui du clinquant 10 sur le disque (plus précisément à la réduction des surfaces de contact entre clinquant et disque), ce qui oblige, à terme, à remplacer le disque 21.

L'invention a pour objectif de pallier cet inconvénient.

Cet objectif est atteint grâce à un clinquant pour aube de turbomachine, destiné à envelopper le pied de cette aube, ce clinquant comprenant : deux branches destinées à couvrir les portées du pied d'aube; une base reliant ces branches entre elles; et, à une de ses extrémités, au moins un élément de maintien apte à venir en contact avec le pied d'aube pour retenir le clinquant par rapport au pied d'aube, ce clinquant étant caractérisé en ce qu'il comprend, à son autre extrémité, au moins un élément de détrompage en saillie par rapport à la base, du côté opposé aux branches.

Le clinquant de l'invention est destiné à faire partie d'un ensemble de rotor de turbomachine comprenant, en outre : un disque de rotor présentant sur sa périphérie externe des alvéoles; des aubes fixées par leur pied dans lesdites alvéoles; et des cales, chaque cale étant disposée entre la base d'un clinquant et le fond d'une alvéole.

Ledit élément de détrompage est un moyen simple, intégré au clinquant, qui permet de s'apercevoir, lors du montage de l'ensemble de rotor, que le clinquant a été monté à l'envers. En effet, si le clinquant a été monté à l'envers sur le pied d'aube, l'élément de détrompage empêche de glisser une cale entre la base du clinquant et le fond de l'alvéole.

Selon un mode de réalisation, l'élément de détrompage est une languette qui s'étend à partir du bord de la base du clinquant et qui est rabattue du côté opposé aux branches. Le plus souvent, cette languette est rabattue dans un plan sensiblement perpendiculaire à la base. Ce mode de réalisation a pour avantage d'être simple et économique.

Selon un autre mode de réalisation, l'élément de détrompage est une protubérance située sur la face de la base opposée aux branches. Cette protubérance est formée, par exemple, par déformation de la base, par fixation d'une autre pièce sur cette base, ou par découpe d'une languette dans la base et rabattement de cette languette du côté opposé aux branches.

Bien entendu, l'élément de détrompage pourrait être réalisé différemment, du moment qu'il empêche de glisser une cale entre la base du clinquant et le fond de l'alvéole lorsque le clinquant est monté à l'envers sur le pied d'aube et, qu'à l'inverse, il permet de glisser cette cale lorsque le clinquant est monté à l'endroit.

Selon un mode de réalisation, l'élément de maintien est une languette qui s'étend à partir du bord d'une des branches ou de la base, et qui est rabattue entre les branches. Le plus souvent, cette languette est rabattue dans un plan sensiblement perpendiculaire à la base.

Selon un premier exemple de réalisation, le clinquant présente une seule languette qui s'étend à partir de sa base. Selon un deuxième exemple de réalisation, le clinquant présente deux languettes s'étendant respectivement à partir de ses deux branches, ces languettes pouvant ou non être reliées entre elles par une autre pièce, cette pièce empêchant alors les languettes de se déplier.

Bien entendu, l'élément de maintien pourrait être réalisé différemment, du moment qu'il est apte à venir en contact avec le pied d'aube pour retenir le clinquant par rapport au pied d'aube. Notamment, l'élément de maintien pourrait être : une protubérance située sur la face de la base du côté des branches; une pièce s'étendant entre les branches; un épaulement, etc.

L'invention et ses avantages seront mieux compris à la lecture de la description détaillée qui suit, d'un exemple de réalisation de l'invention. Cette description fait référence aux figures annexées sur lesquelles :
- la figure 1 représente en perspective, un exemple connu de clinquant ;
- la figure 2 représente partiellement, en vue explosée, un exemple connu d'ensemble de rotor comprenant le clinquant de la figure 1;
- la figure 3 représente en coupe axiale, l'ensemble de rotor de la figure 2 à l'état assemblé;
- la figure 4 représente en perspective, un exemple de clinquant selon l'invention;
- la figure 5 représente partiellement, en coupe axiale, un ensemble de rotor à l'état assemblé, comprenant le clinquant de la figure 4; et
- la figure 6 est une vue analogue à celle de la figure 5, le clinquant ayant été monté à l'envers.

Les figures 1 à 3 ont été précédemment décrites et représentent l'art antérieur.

Les éléments et parties d'élément analogues entre les figures 1 à 3 et les figures 4 à 6 sont repérés par les mêmes références numériques augmentées de 100.

L'exemple de clinquant 110 de la figure 4 diffère de celui de la figure 1 par la présence d'une languette de détrompage 140 à son extrémité 110b. Cette languette de détrompage 140 s'étend à partir du bord 112b de la base 112 du clinquant 110 et est rabattue du côté opposé aux branches 114 du clinquant 110. Ainsi, sur la figure 1, la languette de détrompage 140 fait saillie sous la base 112 du clinquant 110, tandis que les branches 114 se situent au-dessus de la base 112. On notera que l'extrémité 110b et le bord 112b sont opposés à l'extrémité 110a et au bord 112a portant la languette de maintien 116. Dans l'exemple, la languette de détrompage 140 s'étend sur plus de la moitié de la longueur du bord 112b.

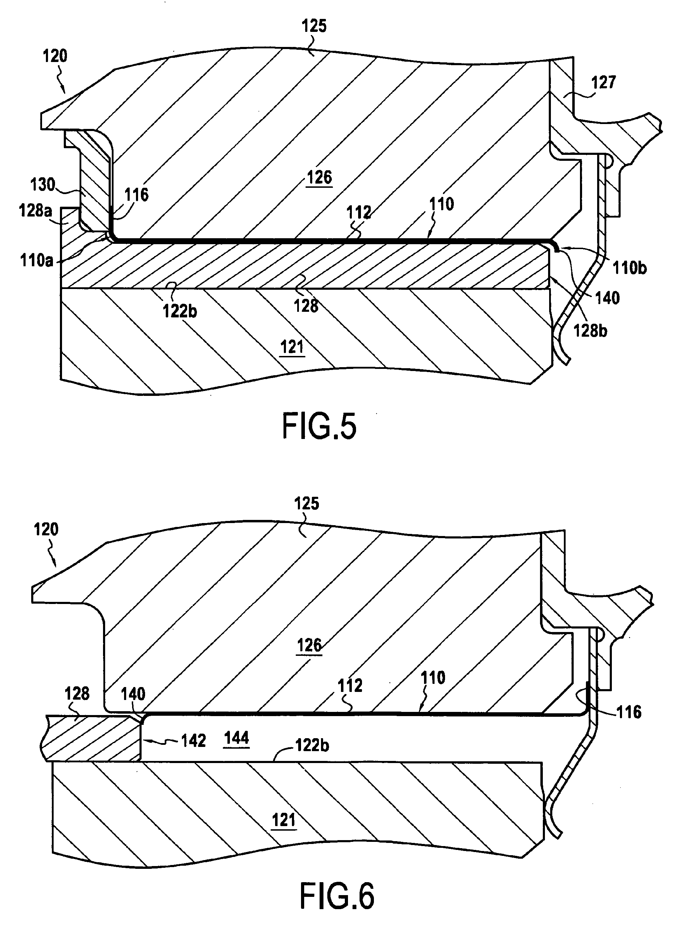

L'ensemble de rotor 120 de la figure 5 diffère de celui des figures 2 et 3 par son clinquant 110.

L'assemblage de l'ensemble de rotor 120 est analogue à celui de l'ensemble des figures 2 et 3, précédemment décrit. En particulier, le clinquant 110 est enfilé sur le pied 126 de l'aube 125, jusqu'à ce que la languette de maintien 116 vienne en butée contre le pied d'aube 126. Lorsque le clinquant 110 est enfilé sur le pied d'aube 126, les deux branches 114 du clinquant recouvrent les portées du pied d'aube. Puis, le pied d'aube 126 et le clinquant 110 qui l'enveloppe, sont enfilés dans l'alvéole du disque de rotor 121. Puis on positionne le verrou 130 devant le pied d'aube 126, contre la languette de maintien 116 du clinquant 110. Enfin, la cale 128 est glissée entre la base 112 du clinquant et le fond 122b de l'alvéole. Lorsque l'ensemble de rotor 120 est à l'état assemblé, le mouvement axial relatif du clinquant 110 par rapport au pied d'aube 126 est empêché du fait que la languette de maintien 116 est retenue entre le verrou 130 (lui-même retenu par le rebord amont 128a de la cale 128) et le pied d'aube 126.

Le clinquant 110 est monté à l'endroit (i.e. correctement) sur le pied d'aube 126, lorsqu'il est enfilé par l'avant (i.e. par l'amont) du pied d'aube 126. Sur la figure 5, le clinquant 110 est monté à l'endroit. Inversement, le clinquant 110 est enfilé à l'envers (i.e. incorrectement) sur le pied d'aube 126, lorsqu'il est enfilé par l'arrière (i.e. par l'aval) du pied d'aube 126. Sur la figure 6, le clinquant 110 est monté à l'envers.

En référence à la figure 6, lorsque le clinquant est monté à l'envers, la languette de détrompage 140 s'étend au travers de l'orifice d'entrée 142 du logement 144 situé sous le clinquant 110, entre la base 112 du clinquant et le fond 122b de l'alvéole, et destiné à recevoir la cale 128. Ainsi, la languette de détrompage 140 bloque l'insertion de la cale 128 via l'orifice 142. La languette de détrompage 140 forme ainsi une butée pour la cale 128, comme représenté sur la figure 6. A l'extrême, si la cale 128 était insérée en force, la languette de détrompage 140 se déformerait et la cale 128 pénétrerait sur une faible longueur à l'intérieur du logement 144, mais ne pourrait pas y pénétrer complètement. Généralement, le cliquant 110 est réalisé en un matériau relativement rigide et la languette de détrompage 140 ne se déforme pas facilement.

A l'inverse, en référence à la figure 5, lorsque le clinquant est monté à l'endroit, la cale 128 est glissée sans difficulté entre la base 112 du clinquant et le fond 122b de l'alvéole. Lorsque la cale 128 est en place, la languette de détrompage 140 coiffe l'extrémité aval 128b de la cale 128.

Le clinquant 110 peut être réalisé par découpe et pliage d'une tôle en métal ou en alliage métallique (par exemple, l'alliage commercialisé sous la marque Inconel 718), d'épaisseur limitée (par exemple, 0,35 mm).

La languette de détrompage 140 peut être découpée et mise en forme en même temps que les autres parties du clinquant, de sorte que cette languette 140 est une solution de détrompage simple et économique.

## Revendications

1. Clinquant pour aube de turbomachine, destiné à envelopper le pied (126) de cette aube (125), ce clinquant comprenant : deux branches (114) destinées à couvrir les portées du pied d'aube; une base (112) reliant ces branches (114) entre elles; et au moins un élément de maintien situé à une des extrémités (110a) du clinquant (110) et apte à venir en contact avec le pied d'aube (126) pour retenir le clinquant (110) par rapport au pied d'aube (126), ce clinquant étant **caractérisé en ce qu'**il comprend, à son autre extrémité (110b), au moins un élément de détrompage en saillie par rapport à la base (112), du côté opposé aux branches (114).

2. Clinquant selon la revendication 1, dans lequel l'élément de détrompage est une languette (140) qui s'étend à partir du bord (112b) de la base (112) et qui est rabattue du côté opposé aux branches (114).

3. Clinquant selon la revendication 1, dans lequel l'élément de détrompage est une protubérance située sur la face de la base (112) opposée aux branches (114).

4. Clinquant selon l'une quelconque des revendications 1 à 3, dans lequel l'élément de maintien est une languette (116) qui s'étend à partir du bord (112a) d'une des branches (114) ou de la base (112), et qui est rabattue entre les branches (114).

5. Ensemble de rotor de turbomachine comprenant : un disque de rotor (121) présentant sur sa périphérie externe des alvéoles (122); des aubes (125) fixées par leur pied (126) dans lesdites alvéoles; des clinquants (110) selon l'une quelconque des revendications précédentes; et des cales (128), chaque cale (128) étant disposée entre la base (112) d'un clinquant (110) et le fond d'une alvéole (122).

6. Turbomachine comprenant un ensemble de rotor (120) selon la revendication 5.

## Claims

1. Shim for a turbomachine blade, the shim being for surrounding the root (126) of the blade (125) and comprising: two branches (114) for covering the bearing surfaces of the blade root; a base (112) interconnecting these branches (114); and at least one holder element situated at one end (110a) of the shim (110) and adapted for coming into contact with the blade root (126) to retain the shim (110) relative to the blade root (126), the shim being **characterized in that** it comprises, at its other end (110b), at least one fool proofing element projecting from the base (112) in the opposite direction to the branches (114).

2. Shim according to claim 1, wherein the foolproofing element is a tongue (140) that projects from the edge (112b) of the base (112) and that is folded in the opposite direction to the branches (114).

3. Shim according to claim 1, wherein the foolproofing element is a protuberance situated on the face of the base (112) that faces away from the branches (114).

4. Shim according to any one of claims 1 to 3, wherein the holder element is a tongue (116) that projects from the edge (112a) of one of the branches (114) or of the base (112) and that is folded to lie between the branches (114).

5. A turbomachine rotor assembly comprising: a rotor disk (121) presenting recesses (122) in its outer periphery; blades (125) fastened via their root (126) in said recesses; shims (110) according to any preceding claim; and spacers (128), each spacer (128) being placed between the base (112) of a shim (110) and the bottom of a recess (122).

6. A turbomachine including a rotor assembly (120) according to claim 5.

## Patentansprüche

1. Zwischenstück für eine Turbomaschinenschaufel, das dazu bestimmt ist, den Fuß (126) dieser Schaufel (125) zu umgeben, wobei dieses Zwischenstück umfaßt: zwei Schenkel (114), die dazu bestimmt sind, die Auflageflächen des Schaufelfußes zu bedecken, eine Basis (112), die diese Schenkel (114) untereinander verbindet, sowie wenigstens ein Halteelement, das sich an einem der Enden (110a) des Zwischenstücks (110) befindet und geeignet ist, mit dem Schaufelfuß (126) in Kontakt zu gelangen, um das Zwischenstück (110) gegenüber dem Schaufelfuß (126) zu halten, wobei dieses Zwischenstück **dadurch gekennzeichnet ist, daß** es an seinem anderen Ende (110b) wenigstens ein Unverwechselbarkeitselement aufweist, das auf der von den Schenkeln (114) abgewandten Seite gegenüber der Basis (112) vorspringt.

2. Zwischenstück nach Anspruch 1, wobei das Unverwechselbarkeitselement eine Zunge (140) ist, die sich vom Rand (112b) der Basis (112) aus erstreckt und die auf der von den Schenkeln (114) abgewandten Seite umgebogen ist.

3. Zwischenstück nach Anspruch 1, wobei das Unverwechselbarkeitselement eine Ausbauchung ist, die sich auf der von den Schenkeln (114) abgewandten Seite der Basis (112) befindet.

4. Zwischenstück nach einem der Ansprüche 1 bis 3, wobei das Halteelement eine Zunge (116) ist, die sich vom Rand (112a) von einem der Schenkel (114) oder der Basis (112) aus erstreckt und die zwischen den Schenkeln (114) umgebogen ist.

5. Rotoranordnung einer Turbomaschine umfassend: eine Rotorscheibe (121), die an ihrem Außenumfang Mulden (122) aufweist, Schaufeln (125), die mit ihrem Fuß (126) in den Mulden befestigt sind, Zwischenstücke (110) nach einem der vorhergehenden Ansprüche sowie Keile (128), wobei jeder Keil (128) zwischen der Basis (112) eines Zwischenstücks (110) und dem Boden einer Mulde (122) angeordnet ist.

6. Turbomaschine, die eine Rotoranordnung (120) nach Anspruch 5 umfaßt.
